(19) Europäisches Patentamt / European Patent Office / Office européen des brevets

(11) **EP 4 727 163 A1**

(12) **EUROPEAN PATENT APPLICATION**
published in accordance with Art. 153(4) EPC

(43) Date of publication:
**15.04.2026 Bulletin 2026/16**

(21) Application number: **24843508.3**

(22) Date of filing: **17.07.2024**

(51) International Patent Classification (IPC):
**H04R 1/34** (2006.01)   **H04R 1/02** (2006.01)
**H04R 7/16** (2006.01)

(52) Cooperative Patent Classification (CPC):
**H04R 1/02; H04R 1/34; H04R 7/16**

(86) International application number:
**PCT/KR2024/010287**

(87) International publication number:
**WO 2025/018793 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.07.2023 KR 20230092457
09.08.2023 KR 20230104190**

(71) Applicant: **Samsung Electronics Co., Ltd.
Suwon-si, Gyeonggi-do 16677 (KR)**

(72) Inventors:
• **LEE, Hunki
  Suwon-si, Gyeonggi-do 16677 (KR)**

• **KIM, Kiwon
  Suwon-si, Gyeonggi-do 16677 (KR)**
• **KIM, Taeeon
  Suwon-si, Gyeonggi-do 16677 (KR)**
• **YANG, Seongkwan
  Suwon-si, Gyeonggi-do 16677 (KR)**
• **PARK, Taeyoung
  Suwon-si, Gyeonggi-do 16677 (KR)**
• **CHO, Woojin
  Suwon-si, Gyeonggi-do 16677 (KR)**
• **CHO, Joonrae
  Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE COMPRISING SPEAKER**

(57)    An electronic device according to one embodiment of the present disclosure comprises: a vibration unit for generating a sound; and a conduit unit which is formed on the front surface of the vibration unit, and which is the space through which the sound generated by the vibration unit is transmitted, wherein the conduit unit includes: a radiation opening for transmitting the sound to the outside of the electronic device; a first tube, which is connected to the radiation opening at one end thereof and extends a first length; and a second tube, which is connected to the first tube at the other end of the first tube, extends a second length in the direction opposite to that of the radiation opening, and is shaped to have a closed end, and the second length can be determined on the basis of the first length and a third length, which is the length from the center of the vibration unit to the other end of the first tube.

FIG. 3

EP 4 727 163 A1

# Description

## [Technical Field]

The present disclosure relates to an electronic device comprising a speaker.

## [Background Art]

An electronic device (e.g., a speaker device) may include a conduit unit disposed on the front surface of the vibration unit (e.g., a speaker unit). Sound generated by the vibration unit may be radiated to the side surface of the electronic device through the conduit unit.

The sound pressure level (SPL) generated by a vibration unit may vary depending on changes in the frequency of the vibration unit. Depending on the changes in the frequency of the vibration unit, the sound pressure level may include local peaks and troughs.

## [Disclosure of Invention]

## [Solution to Problem]

For the improvement of the low-frequency acoustic performance of an electronic device (e.g., a speaker device), a relatively large-sized vibration unit (e.g., a speaker unit) may be included. As the size of the vibration unit increases, the distance from the center to the edge of the vibration unit may increase. As the distance from the center to the edge of the vibration unit increases, the sound quality of the electronic device may deteriorate because of the local troughs in the sound pressure level.

Therefore, a structure may be required that can reduce the performance degradation of an electronic device (e.g., a speaker device) that include a relatively large-sized vibration unit.

An electronic device according to one embodiment of the present disclosure comprises: a vibration unit for generating a sound; and a conduit unit which is formed on the front surface of the vibration unit, and which is the space through which the sound generated by the vibration unit is transmitted, wherein the conduit unit includes: a radiation opening for transmitting the sound to the outside of the electronic device; a first tube, which is connected to the radiation opening at one end thereof and extends a first length; and a second tube, which is connected to the first tube at the other end of the first tube, extends a second length in the direction opposite to that of the radiation opening, and is shaped to have a closed end, and the second length can be determined on the basis of the first length and a third length, which is the length from the center of the vibration unit to the other end of the first tube.

An electronic device according to one embodiment of the present disclosure comprises: a vibration unit that generates sound; a support unit that surrounds the vibration unit; a cover that is disposed to be spaced apart from the vibration unit; and a conduit unit formed by the cover and the support unit, wherein the conduit unit may include: a radiation opening for transmitting the sound to the outside of the electronic device; a first tube, which is connected to the radiation opening at one end thereof and extends a first length; and a second tube, which is connected to the first tube at the other end of the first tube, extends a second length in the direction opposite to that of the radiation opening, and is shaped to have a closed end.

An electronic device according to one embodiment of the present disclosure may include a separate closed tube to improve the acoustic performance of the electronic device.

An electronic device according to one embodiment of the present disclosure may eliminate second peaks and troughs in sound pressure level according to frequency changes of a vibration unit by including a separate closed tube.

An electronic device according to one embodiment of the present disclosure may utilize various frequency bands by eliminating second peaks and troughs in sound pressure levels, thereby further improving the acoustic performance of the electronic device.

## [Brief Description of Drawings]

FIG. 1 is a block diagram of an electronic device within a network environment according to one embodiment.

FIGS. 2a, 2b, and 2c are diagrams illustrating an electronic device according to one embodiment of the present disclosure.

FIG. 3 is a diagram illustrating a vibration unit and a conduit unit in a cross-section perpendicular to the width direction of an electronic device according to one embodiment of the present disclosure.

FIG. 4 is a diagram illustrating a vibration unit and a conduit unit in a cross-section perpendicular to the height direction of the electronic device according to one embodiment of the present disclosure.

FIG. 5 is a diagram illustrating an electronic device according to one embodiment of the present disclosure.

FIGS. 6a, 6b, and 6c are diagrams illustrating an electronic device according to one embodiment of the present disclosure.

FIG. 7 is a diagram illustrating a vibration unit and a conduit unit according to one embodiment of the present disclosure.

FIGS. 8a and 8b are diagrams illustrating an electronic device according to one embodiment of the present disclosure.

FIGS. 9a and 9b are diagrams illustrating an electronic device according to one embodiment of the present disclosure.

FIG. 10 is a diagram illustrating an electronic device according to one embodiment of the present disclosure.

FIG. 11 is a diagram illustrating an electronic device according to one embodiment of the present disclosure.

FIG. 12 is a graph illustrating the sound pressure level of an electronic device according to one embodiment of the present disclosure.

**[Mode for the Invention]**

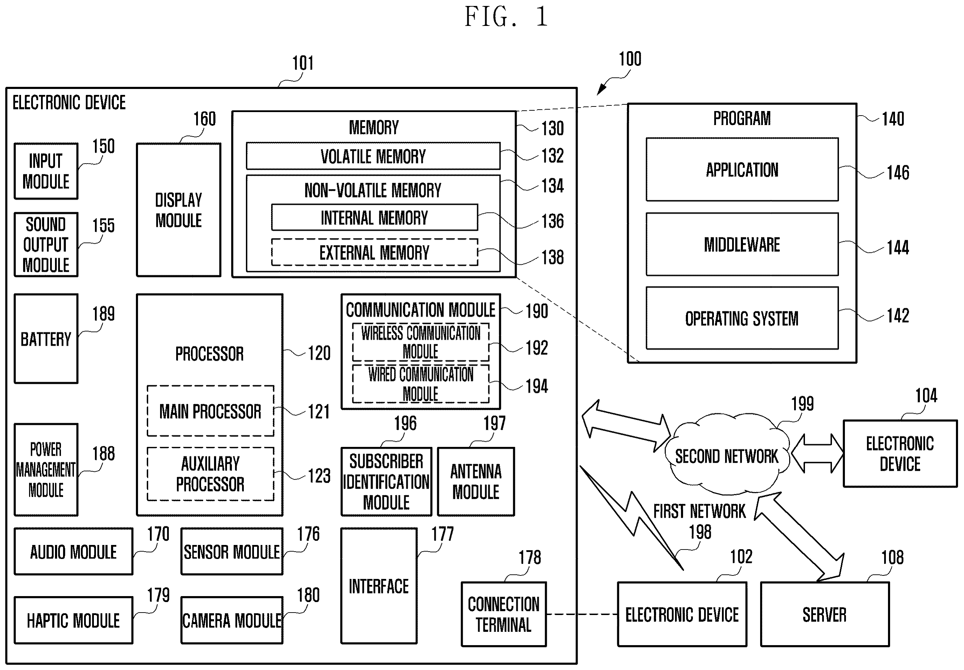

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

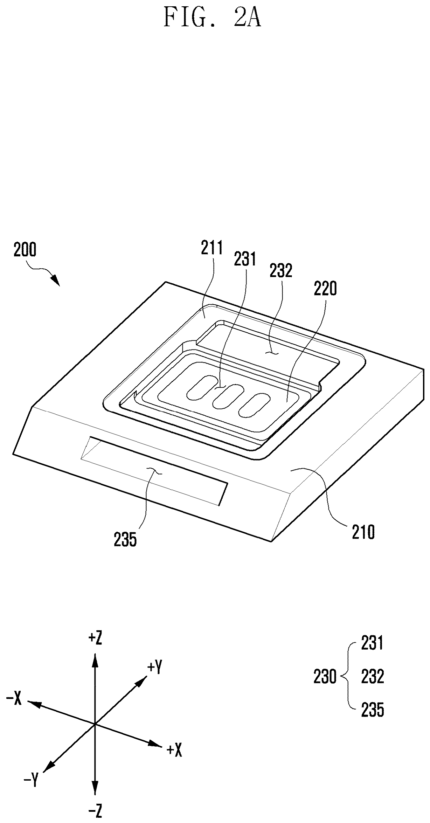

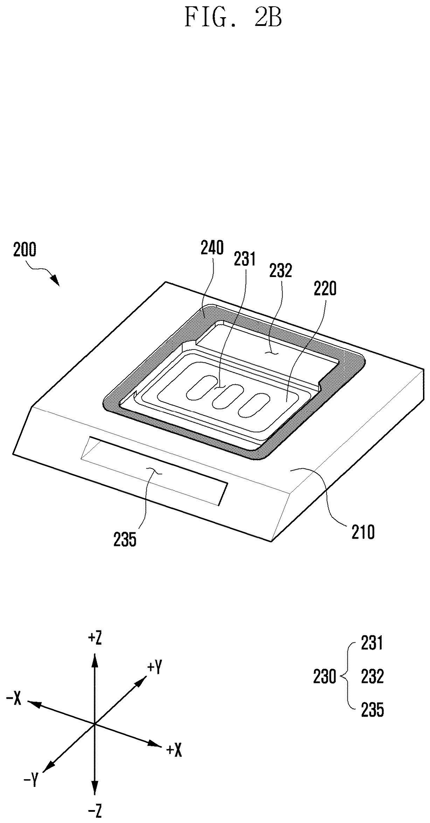

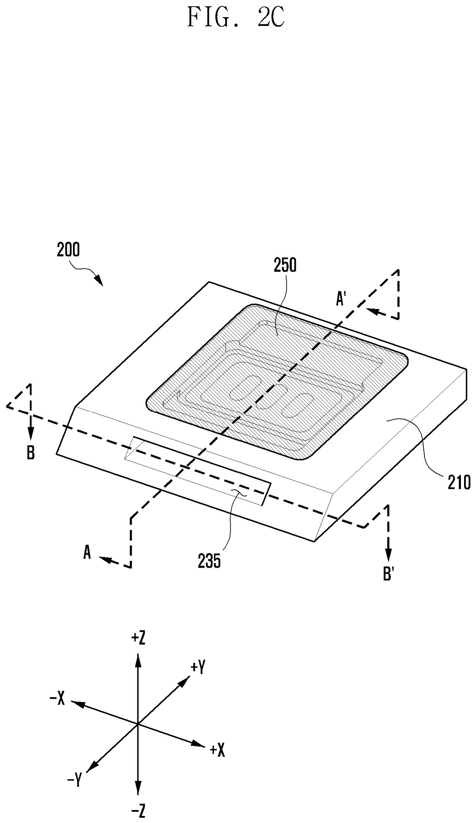

FIGS. 2a, 2b, and 2c are diagrams illustrating an electronic device according to one embodiment of the present disclosure.

The electronic device 200 of FIGS. 2a, 2b, and 2c may include at least some of the components of the electronic device 101 of FIG. 1.

An electronic device 200 according to one embodiment of the present disclosure may include a support unit 210, a vibration unit 220, a conduit unit 230, an adhesive member 240, and/or a cover 250.

In describing an electronic device 200 according to one embodiment of the present disclosure, the width direction of the electronic device 200 may mean the X-axis direction, and the length direction of the electronic device 200 may mean the Y-axis direction. The height direction of the electronic device 200 may mean the Z-axis direction.

In one embodiment, the electronic device 200 may mean a speaker device, a speaker module, and/or a speaker system, or may include a speaker device, a speaker module, and/or a speaker system. For example, the electronic device 200 illustrated in FIGS. 2a, 2b, and 2c may be a speaker device that serves to output an acoustic signal.

In one embodiment, the vibration unit 220 may be a constitution that generates sound through vibration. For example, the vibration unit 220 may mean a speaker unit that generates sound, or may include a speaker unit.

With reference to FIG. 2a, the vibration unit 220 may be disposed inside the support unit 210. For example, the vibration unit 220 may be at least partially surrounded by the support unit 210.

In one embodiment, the support unit 210 may include a seating unit 211. With reference to FIG. 2a, the seating unit 211 may be formed in a shape that surrounds the periphery of the vibration unit 220.

With reference to FIG. 2b, an adhesive member 240 may be disposed on the seating unit 211 of the support unit 210. The adhesive member 240 may serve to couple the cover 250 to the support unit 210. The adhesive member 240 may include an adhesive material (e.g., bond or double-sided tape).

With reference to FIG. 2c, a cover 250 may be disposed on a support unit 250. The cover 250 may be coupled to the support unit 210 by an adhesive member 240.

In one embodiment, at least a portion of the conduit unit 230 may be formed in the front direction of the vibration unit 220. The front direction of the vibration unit 220 may mean a direction facing the positive Z-axis direction in the vibration unit 220. In one embodiment, the conduit unit 230 may be a space through which sound generated from the vibration unit 220 is transmitted.

In one embodiment, the conduit unit 230 may be formed by the support unit 210 and the cover 250. For example, the conduit unit 230 may be a space at least partially surrounded by the support unit 210 and the cover 250.

In one embodiment, the conduit unit 230 may include a radiation opening 235 at one end. Sound generated from the vibration unit 220 may be transmitted to the outside of the electronic device 200 through the radiation opening 235.

In one embodiment, the radiation opening 235 may be formed on a side surface of the electronic device 200. The side surface of the electronic device 200 may be a surface facing the width direction (e.g., X-axis direction) or the length direction (Y-axis direction) of the electronic device 200.

In one embodiment, the electronic device 200 illustrated in FIGS. 2a, 2b, and 2c may be a portion of the constitution of another electronic device (e.g., the electronic device 101 of FIG. 1). For example, the electronic device 200 illustrated in FIGS. 2a, 2b, and 2c may mean a sound output module 155 (see FIG. 1) included in the electronic device 101 of FIG. 1. According to one embodiment, the electronic device 200 may be disposed inside the other electronic device 101 (see FIG. 1).

When an electronic device 200 according to one embodiment corresponds to a portion of the constitution of another electronic device 101 (see FIG. 1), some of the components of the electronic device 200 may include a portion of the components of the other electronic device 101 (see FIG. 1). For example, the cover 250 of the electronic device 200 illustrated in FIG. 2c may include a portion of a display (e.g., the display module 160 of FIG. 1) and/or a support bracket (not shown) of the other electronic device 101 (see FIG. 1).

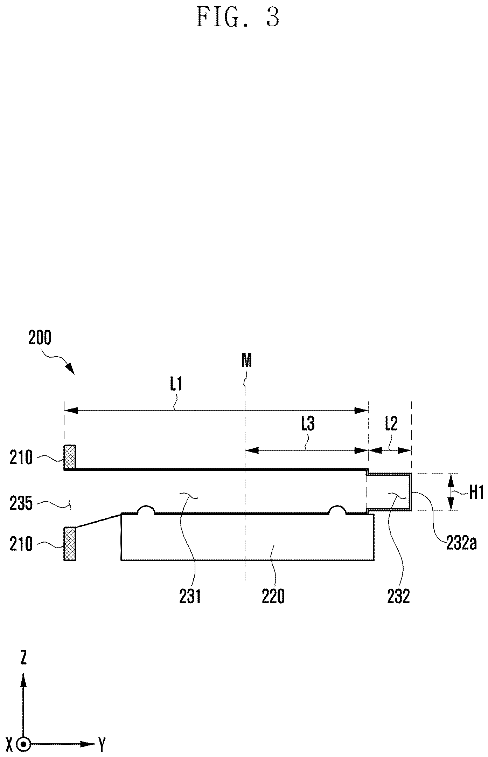

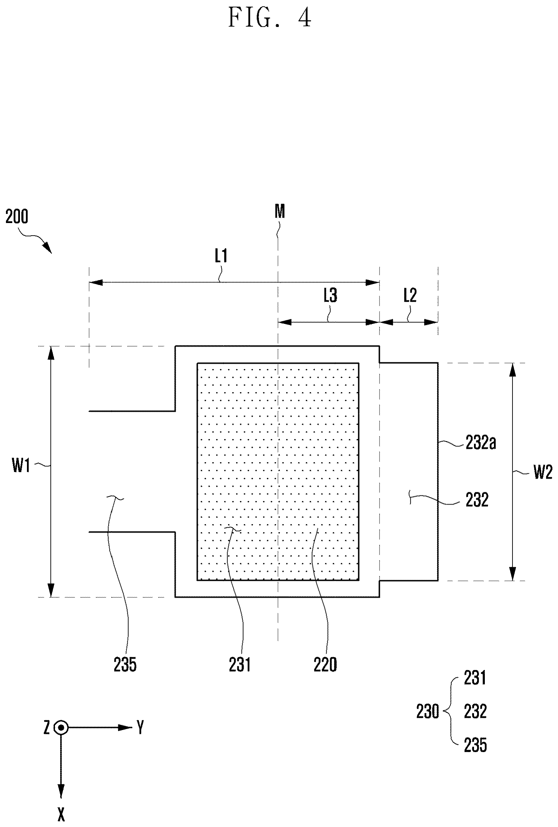

FIGS. 3 and 4 are diagrams illustrating a vibration unit 220 and a conduit unit 230 according to one embodiment of the present disclosure.

FIG. 3 may be a diagram illustrating a vibration unit 220 and a conduit unit 230 as viewed from the A-A' cross-section of FIG. 2c (e.g., a cross-section perpendicular to the width direction of the electronic device 200). For example, FIG. 3 may be a conceptual diagram corresponding to the vibration unit 220 and the conduit unit 230 as viewed from the A-A' cross-section of FIG. 2c.

FIG. 4 may be a diagram illustrating a vibration unit 220 and a conduit unit 230 as viewed from the B-B' cross-section of FIG. 2c (e.g., a cross-section perpendicular to the height direction of the electronic device 200). For example, FIG. 4 may be a conceptual diagram corresponding to the vibration unit 220 and the conduit unit 230 as viewed from the B-B' cross-section of FIG. 2c.

In one embodiment, the vibration unit 220 may be disposed to overlap at least a portion of the conduit unit 230. For example, with reference to FIGS. 3 and 4, the conduit unit 230 may be disposed in one surface direction of the vibration unit 220. For example, the conduit unit 230 may be disposed in the positive Z-axis direction with respect to the vibration unit 220.

With reference to FIG. 4, the conduit unit 230 is illustrated as being directly disposed on one surface of the vibration unit 220, but this is exemplary, and other constitutions may be disposed between the vibration unit 220 and the conduit unit 230. For example, at least a portion of the support unit 210 may be disposed between the vibration unit 220 and the conduit unit 230, and the vibration of the vibration unit 220 may be transmitted to the conduit unit 230 through the support unit 210.

In one embodiment, the conduit unit 230 may include a first tube 231, a second tube 232, and/or a radiation opening 235.

In one embodiment, the first tube 231 and the second tube 232 may include a space through which sound generated from the vibration unit 220 moves.

In one embodiment, a radiation opening 235 may be formed at one end of the conduit unit 230. For example, with reference to FIG. 3, the radiation opening 235 may be formed at the negative Y-axis direction end of the conduit unit 230.

In one embodiment, one end of the first tube 231 may mean an end facing in the negative Y-axis direction in the first tube 231. The other end of the first tube 231 may mean an end facing in the positive Y-axis direction in the first tube 231.

In one embodiment, the first tube 231 may be connected to a radiation opening 235 at one end.

In one embodiment, the first tube 231 may extend along the length direction (e.g., the Y-axis direction) of the electronic device 200. The first tube 231 may extend by a first length L1 in the length direction of the electronic device 200.

In one embodiment, the first tube 231 may be connected to the second tube 232. For example, the other end of the first tube 231 may be connected to the second tube 232.

In one embodiment, the second tube 232 may extend along the length direction (e.g., Y-axis direction) of the electronic device 200. The second tube 232 may extend by a second length L2 in a direction opposite to the direction in which the radiation opening 235 is located with respect to the first tube 231.

In one embodiment, the second tube 232 may be a closed tube having a closed end. For example, the end 232a of the second tube 232 facing opposite to the first tube 231 may be formed in a closed form.

In one embodiment, the center line M of the vibration unit 220 may mean an imaginary line that passes through a point located at the center in the length direction (e.g., Y-axis direction) of the vibration unit 220 and extends in the height direction (e.g., Z-axis direction). A third length L3 may be provided from the center line M of the vibration unit 220 to the other end of the first tube 231.

In one embodiment, the second length L2 may be determined on the basis of the first length L1 and the third length L3. For example, the second length L2 may be formed as a length within the range of [Equation 1].

[Equation 1]

$$\frac{L1 - 3 \times L3}{2} < L2 < \frac{L1e - 3 \times L3}{2}$$

In one embodiment, the first effective length (L1e) may be a length determined on the basis of the shape of the conduit unit 230 and/or the end correction effect by the radiation opening 235. For example, the first effective length (L1e) may be derived by [Equation 2].

[Equation 2]

$$L1e = \frac{3 \times c}{4 \times (f\_peak)}$$

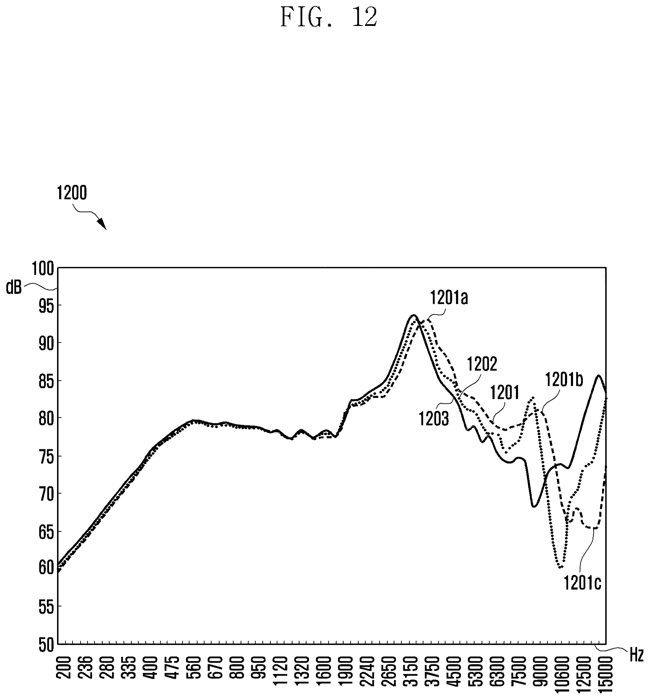

In [Equation 2], c may represent the sound speed of the medium, and f_peak may represent a second peak frequency measurement value. The sound speed (c) of the medium may represent the speed of sound in the medium (e.g., air) located inside the conduit unit 230. In [Equation 2], the second peak frequency measurement value (f_peak) may represent a measurement value of the frequency at which the second peak (e.g., 1201b) illustrated in FIG. 12 appears.

In an electronic device 200 according to one embodiment, when the second length L2 is formed to satisfy [Equation 1] and [Equation 2], the second peak 1201b (see FIG. 12) and/or the trough 1201c (see FIG. 12) in the graph 1200 illustrated in FIG. 12 may be eliminated, and the acoustic performance of the electronic device 200 may be improved.

In one embodiment, the second tube 232 may have a predetermined height and extend in the width direction (e.g., in the X-axis direction) of the electronic device 200. For example, the second tube 232 may have a first height H1 and extend in the width direction (e.g., in the X-axis direction) of the electronic device 200 by a second width W2.

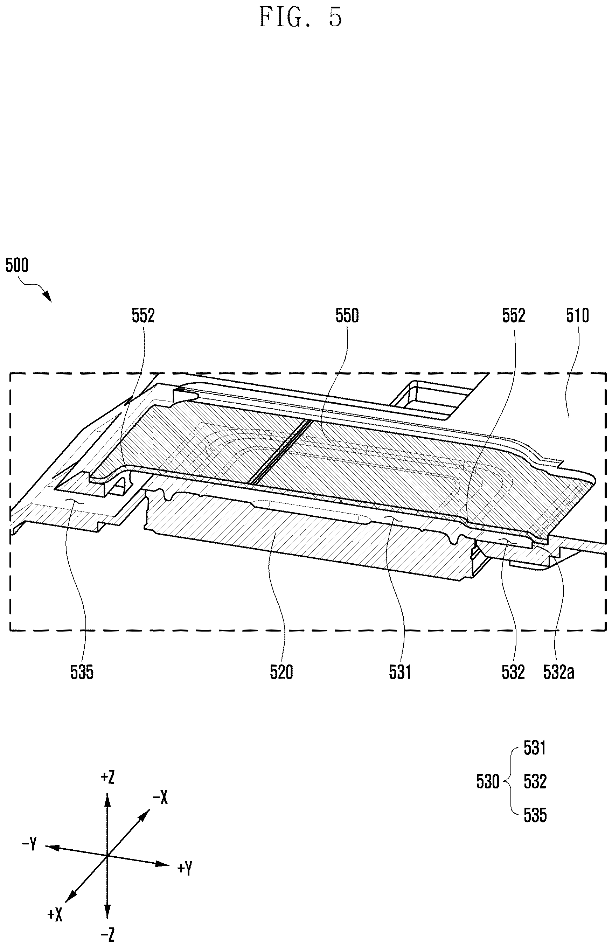

FIG. 5 is a diagram illustrating an electronic device 500 according to one embodiment of the present disclosure.

FIG. 5 may be a cross-sectional perspective view illustrating an electronic device 500 according to one embodiment of the present disclosure after being cut in a direction perpendicular to the width direction (e.g., X-axis direction) of the electronic device 500.

The electronic device 500 of FIG. 5 may be substantially identical to the electronic device 200 illustrated in FIGS. 2a, 2b, and 2c. For example, the electronic device 500 of FIG. 5 may mean the electronic device 200 of FIG. 2c, or may include at least a portion of the electronic device 200.

In one embodiment, the electronic device 500 may include a support unit 510, a vibration unit 520, a conduit unit 530, and/or a cover 550. The support unit 510, the vibration unit 520, the conduit unit 530, and the cover 550 of the electronic device 500 of FIG. 5 may have substantially the same functions as the support unit 210, the vibration unit 220, the conduit unit 230, and the cover 250 of FIGS. 2a, 2b, and 2c, respectively.

In describing an electronic device 500 according to one embodiment of the present disclosure, the width direction of the electronic device 500 may mean the X-axis direction, and the length direction of the electronic device 500 may mean the Y-axis direction. The height direction of the electronic device 500 may mean the Z-axis direction.

In one embodiment, the conduit unit 530 may include a first tube 531, a second tube 532, and/or a radiation opening 535.

In one embodiment, a radiation opening 535 may be disposed at one end of the first tube 531, and a second tube 532 may be disposed at the other end of the first tube 531.

In one embodiment, the second tube 532 may be a closed tube having a closed end. For example, with reference to FIG. 5, the end 532a of the second tube 532 may be formed in a closed form.

In one embodiment, the first tube 531 and the second tube 532 may be spaces surrounded by a support unit 510 and a cover 550.

In one embodiment, the heights of the first tube 531 and the second tube 532 may be formed differently. For example, the first tube 531 may be extended longer than the second tube 532 in the height direction (e.g., Z-axis direction) of the electronic device 500.

In one embodiment, the cover 550 may include abending area 552. For example, the bending area 552 may be an area in which the cover 550bendings and extends. In one embodiment, the bending area 552 may be formed at a distal end of the first tube 531. For example, the bending area 552 may be formed at a portion that overlaps a boundary between the first tube 531 and the second tube 532.

In one embodiment, the bending area 552 of the cover 550 may be configured to secure a reinforcing structure (e.g., a stainless steel plate (not shown)) to one surface of the cover 550. For example, the reinforcing structure (not shown) may be disposed on one surface of the cover 550 (e.g., a surface facing the positive Z-axis direction) of the cover 550, and at least a portion of the reinforcing structure (not shown) may be secured to the bending area 552 to maintain a fixed position.

In FIG. 5, the cover 550 is illustrated as being bent and extended at least in a portion including abending area 552, but this is exemplary, and the shape of the cover 550 may not be limited thereto. For example, the cover 550 may be formed to extend, without including abending area 552 and without being bent, in a direction parallel to a plane that is substantially perpendicular to the height direction of the electronic device 500. When the cover 550 does not include abending area 552 and extends parallel to a plane that is substantially perpendicular to the height direction of the electronic device 500, the first tube 531 and the second tube 532 may extend to substantially the same length on the basis of the height direction (e.g., Z-axis direction) of the electronic device 500.

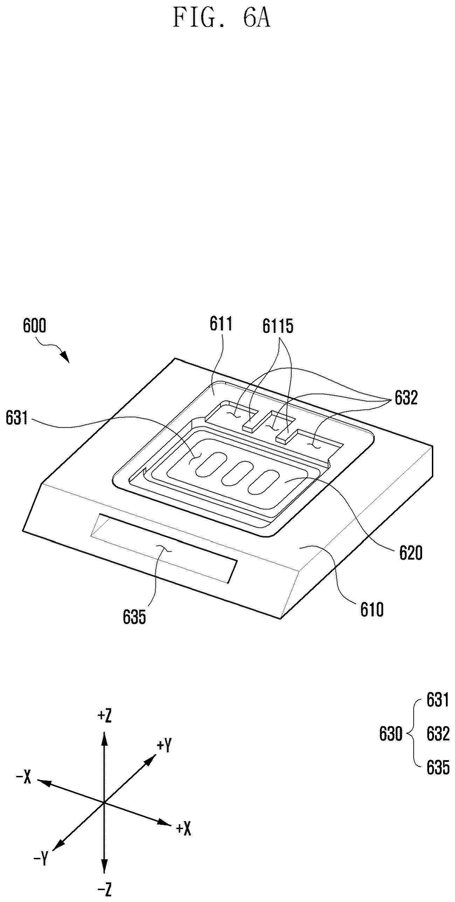

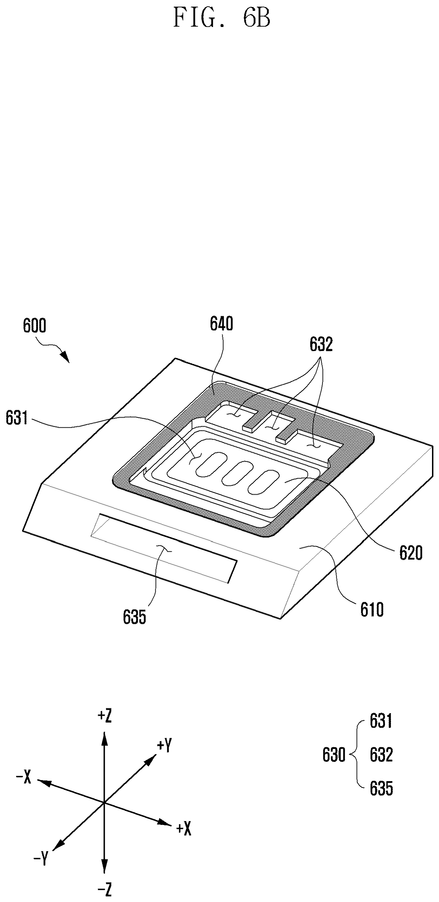

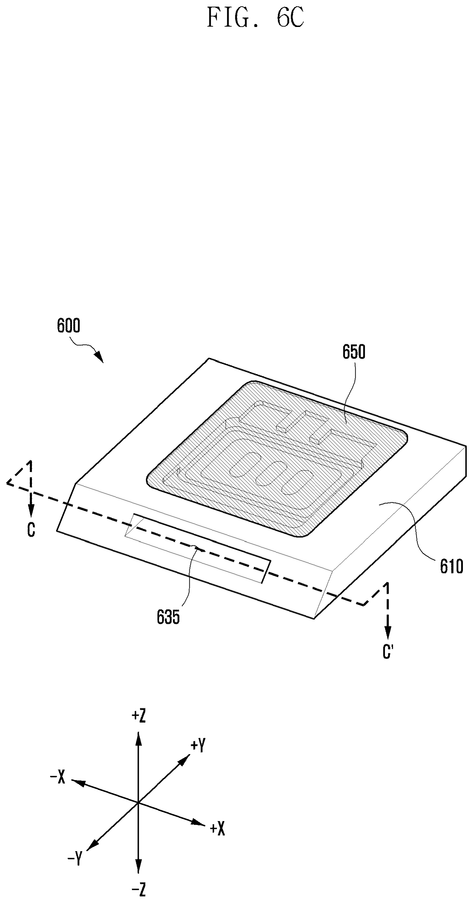

FIGS. 6a, 6b, and 6c are diagrams illustrating an electronic device according to one embodiment of the present disclosure.

The electronic device 600 of FIGS. 6a, 6b, and 6c may include at least a portion of the electronic device 200 of FIG. 2c.

An electronic device 600 according to one embodiment of the present disclosure may include a support unit 610, a vibration unit 620, a conduit unit 630, an adhesive member 640, and/or a cover 650. The support unit 610, the vibration unit 620, the conduit unit 630, the adhesive member 640, and the cover 650 of the electronic device 600 of FIG. 6 may have substantially the same functions as the support unit 210, the vibration unit 220, the conduit unit 230, the adhesive member 240, and the cover 250 of FIGS. 2a, 2b, and 2c, respectively .

In describing an electronic device 600 according to one embodiment of the present disclosure, the width direction of the electronic device 600 may mean the X-axis direction, and the length direction of the electronic device 600 may mean the Y-axis direction. The height direction of the electronic device 600 may mean the Z-axis direction.

With reference to FIG. 6a, the vibration unit 620 may be disposed inside the support unit 610. For example, the vibration unit 620 may be at least partially surrounded by the support unit 610.

In one embodiment, the support unit 610 may include a seating unit 611. The seating unit 611 may be formed in a shape that surrounds the periphery of the vibration unit 620.

In one embodiment, the conduit unit 630 may include a first tube 631, a second tube 632, and/or a radiation opening 635.

With reference to FIG. 6a, the seating unit 611 according to one embodiment may include a partition wall 6115. The partition wall 6115 may be an area of the seating unit 611 extending in a direction toward the first tube 631.

In one embodiment, the conduit unit 630 may include a plurality of second tubes 632. For example, with reference to FIG. 6a, the conduit unit 630 may include three second tubes 632. The plurality of second tubes 632 may be formed to be separated from each other by a partition wall 6115.

With reference to FIG. 6b, an adhesive member 640 may be disposed on the seating unit 611 of the support unit 610. The adhesive member 640 may serve to couple the cover 650 to the support unit 610.

With reference to FIG. 6c, a cover 650 may be disposed on a support unit 610. The cover 650 may be coupled to the support unit 610 by an adhesive member 640.

With reference to FIG. 6b, for example, the adhesive member 640 may also be disposed on the partition wall 6115 of the seating unit 611. When the adhesive member 640 is also disposed on the partition wall 6115, the cover 650 and the support unit 610 may be more strongly coupled compared to when the seating unit 611 does not include the partition wall 6115.

In one embodiment, the support unit 610 may further facilitate supporting the cover 650 by including a bulkhead 6115. For example, the bulkhead 6115 may serve to support at least a portion of the cover 650.

In one embodiment, at least a portion of the conduit unit 630 may be formed in the front direction of the vibration unit 620. The front direction of the vibration unit 620 may mean a direction facing the positive Z-axis direction in the vibration unit 620. In one embodiment, the conduit unit 630 may be a space through which sound generated from the vibration unit 620 is transmitted.

In one embodiment, the conduit unit 630 may be formed by the support unit 610 and the cover 650. For example, the conduit unit 630 may be a space at least partially surrounded by the vibration unit 620, the support unit 610, and the cover 650.

In one embodiment, the conduit unit 630 may include a radiation opening 635 at one end. Sound generated from the vibration unit 620 may be transmitted to the outside of the electronic device 600 through the radiation opening 635. In one embodiment, the radiation opening 635 may be formed on a side surface of the electronic device 600. The side surface of the electronic device 600 may be a surface facing the width direction (e.g., X-axis direction) or the length direction (Y-axis direction) of the electronic device 600.

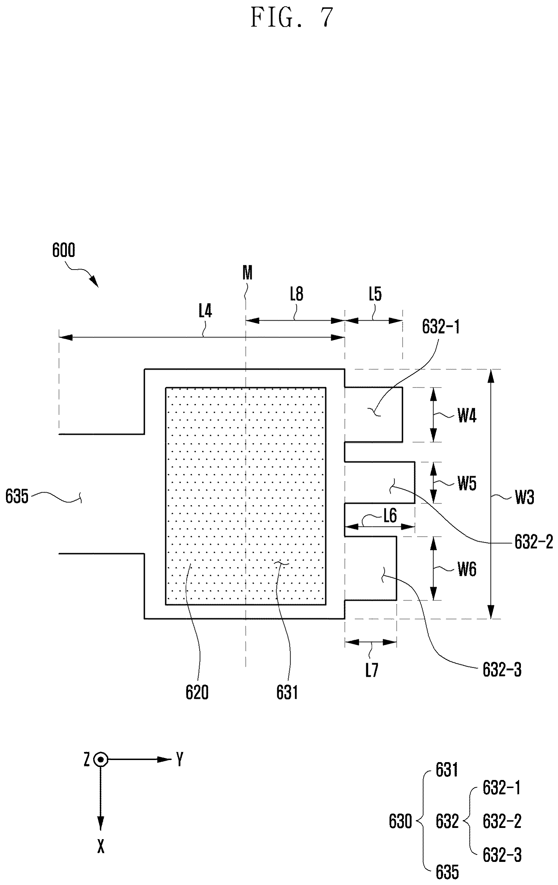

FIG. 7 is a diagram illustrating a vibration unit 620 and a conduit unit 630 according to one embodiment of the present disclosure.

FIG. 7 may be a diagram illustrating a vibration unit 620 and a conduit unit 630 as viewed from the C-C' cross-section of FIG. 6c. For example, FIG. 7 may be a conceptual diagram corresponding to the vibration unit 620 and the conduit unit 630 as viewed from the C-C' cross-section of FIG. 6c.

With reference to FIG. 7, the conduit unit 630 according to one embodiment may include a first tube 631, a second tube 632, and/or a radiation opening 635.

In one embodiment, the first tube 631 may extend in the length direction (e.g., Y-axis direction) of the electronic device 600 by a fourth length L4. The first tube 631 may extend in the width direction of the electronic device 600 by a third width W3.

In one embodiment, the radiation opening 635 may be formed at one end of the first tube 631, and the second tube 632 may be formed at the other end of the first tube 631. In one embodiment, the second tube 632 may be formed at a position spaced apart from the center line M of the vibration unit 620 by an eighth length L8.

In one embodiment, the conduit unit 630 may include a plurality of second tubes 632. For example, the plurality of second tubes 632 may be spaced apart from each other in the width direction of the electronic device 600.

In one embodiment, the second tube 632 may include a second-first tube 632-1, a second-second tube 632-2, and/or a second-third tube 632-3.

In one embodiment, the second-first tube 632-1 may have a fifth length L5 and a fourth width W4. The second-second tube 632-2 may have a sixth length L6 and a fifth width W5. The second-third tube 632-3 may have a seventh length L7 and a sixth width W6.

In one embodiment, the fifth length L5 of the second-first tube 632-1, the sixth length L6 of the second-second tube 632-2, and the seventh length L7 of the second-third tube 632-3 may be determined on the basis of the fourth length L4 and the eighth length L8, respectively.

In one embodiment, the lengths and widths of the plurality of second tubes 632 may be formed in various ways. For example, the fifth length L5 of the second-first tube 632-1, the sixth length L6 of the second-second tube 632-2, and the seventh length L7 of the second-third tube 632-3 may be formed differently. For example, the fourth width W4 of the second-first tube 632-1, the fifth width W5 of the second-second tube 632-2, and the sixth width W6 of the second-third tube 632-3 may be formed differently.

In one embodiment, the width of the first tube 631 may be formed to be greater than the sum of the widths of each of the plurality of second tubes 632. For example, the third width W3 of the first tube 631 may be formed to be greater than the sum of the fourth width W4 of the second-first tube 632-1, the fifth width W5 of the second-second tube 632-2, and the sixth width W6 of the second-third tube 632-3.

In one embodiment, the reflection coefficient of the second tube L2 may vary on the basis of the relative ratio of the sum of the fourth width W4, the fifth width W5, and the sixth width W6 to the third width W3. For example, the trough (e.g., 1201c) of the graph 1200 illustrated in FIG. 12 may vary on the basis of the value obtained by dividing the sum of the fourth width W4, the fifth width W5, and the sixth width W6 by the third width W3.

With reference to FIG. 7, on a plane substantially perpendicular to the height direction of the electronic device 600, each of the plurality of second tubes 632 is illustrated as having a rectangular cross-section. However, this is exemplary, and the cross-section of the second tubes 632 may not be limited thereto. For example, on a plane substantially perpendicular to the height direction of the electronic device 600, each of the plurality of second tubes 632 may be formed to have a cross-section that extends in a curved shape at least in a portion.

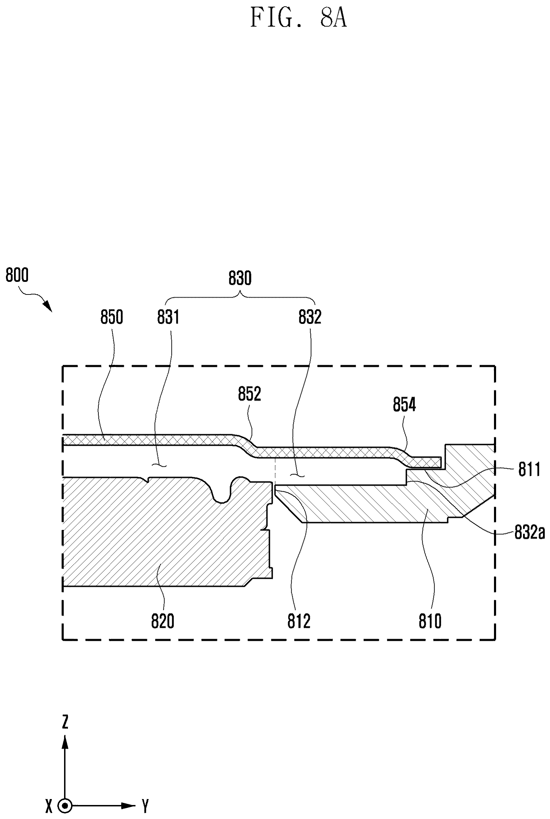

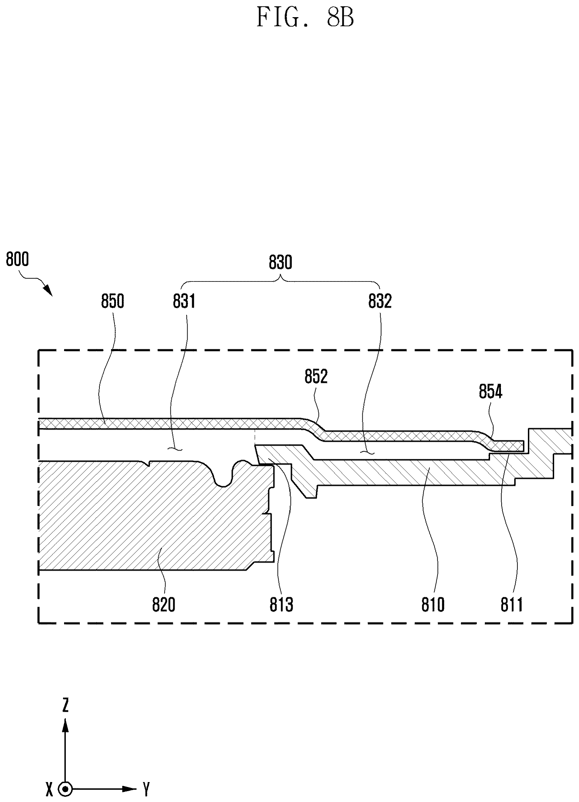

FIGS. 8a and 8b are diagrams illustrating an electronic device 800 according to one embodiment of the present disclosure.

The electronic device 800 of FIGS. 8a and 8b may be substantially identical to or similar to the electronic device 200 illustrated in FIG. 2c. For example, the electronic device 800 of FIGS. 8a and 8b may mean the electronic device 200 of FIG. 2c or may include at least a portion of the electronic device 200 of FIG. 2c.

In describing an electronic device 800 according to one embodiment of the present disclosure, the width direction of the electronic device 800 may mean the X-axis direction, and the length direction of the electronic device 800 may mean the Y-axis direction. The height direction of the electronic device 800 may mean the Z-axis direction.

FIGS. 8a and 8b may be conceptual diagrams illustrating an electronic device 800 according to one embodiment, in a cross-section perpendicular to the width direction (e.g., X-axis direction) of the electronic device 800. For example, FIGS. 8a and 8b may be conceptual diagrams illustrating a cross-section of the electronic device 800 corresponding to the A-A' cross-section of the electronic device 200 of FIG. 2c.

With reference to FIGS. 8a and 8b, an electronic device 800 according to one embodiment may include a support unit 810, a vibration unit 820, a conduit unit 830, and/or a cover 850. The support unit 810, the vibration unit 820, the conduit unit 830, and the cover 850 of the electronic device 800 illustrated in FIGS. 8a and 8b may have substantially the same functions as the support unit 210, the vibration unit 220, the conduit unit 230, and the cover 250 of FIGS. 2a, 2b, and 2c, respectively.

In one embodiment, the conduit unit 830 may be formed by a vibration unit 820, a support unit 810, and a cover 850. For example, the conduit unit 830 may be a space that is at least partially surrounded by the vibration unit 820, the support unit 810, and the cover 850.

In one embodiment, a cover 850 may be disposed in one direction (e.g., positive Z-axis direction) with respect to the conduit unit 830, and a vibration unit 820 and a support unit 810 may be disposed in the other direction (e.g., negative Z-axis direction).

In one embodiment, the conduit unit 830 may include a first tube 831 and/or a second tube 832. The first tube 831 and the second tube 832 may extend along the length direction (e.g., the Y-axis direction) of the electronic device 800. The first tube 831 may be connected to a radiation opening 235 (see FIG. 3) at one end and connected to a second tube 832 at the other end. The second tube 832 may be connected to the first tube 831 and may be formed in a closed shape at an end 832a.

In one embodiment, the cover 850 may include abending area 852 and 854.the bending area 852 and 854 may be an area in which the cover 850bendings and extends. In one embodiment, the bending area 852 and 854 may include a first bending area 852 and/or a second bending area 854.

In one embodiment, the first bending area 852 may be formed at a position overlapping the distal end of the first tube 831 (e.g., the distal end from the first tube 831 toward the second tube 832). The cover 850 may be bent and extended at the first bending area 852 so that the height (e.g., the length in the Z-axis direction) of the second tube 832 may be formed to be smaller than the height of the first tube 831.

In one embodiment, the second bending area 832 may be formed at a position overlapping the end 832a of the second tube 832.

In one embodiment, one surface of the vibration unit 820 may mean a surface of the vibration unit 820 that faces the conduit unit 830. In one embodiment, the side surface of the vibration unit 820 may mean a surface that is substantially perpendicular to the height direction (e.g., Z-axis direction) of the electronic device 800 in the vibration unit 820.

With reference to FIG. 8a, the coupling surface 812 of the support unit 810 according to one embodiment may be formed to face the side surface of the vibration unit 820.

With reference to FIG. 8b, the support unit 810 according to one embodiment may include a fixed area 813. For example, the fixed area 813 may be an area in which a portion of the support unit 810 extends to face one surface of the vibration unit 820. In one embodiment, when the support unit 810 includes the fixed area 813, the support unit 810 may be more strongly coupled to the vibration unit 820.

With reference to FIG. 8a, a support unit 810 according to one embodiment may not include a fixed area 813 and may be coupled to a vibration unit 820 at a coupling surface 812. When the support unit 810 according to one embodiment does not include a separate fixed area 813, the thickness of the support unit 810 (e.g., the length by which the support unit 810 extends in the Z-axis direction) may be formed relatively thin.

In one embodiment, a support unit 810 may be disposed in a lateral direction (e.g., in the positive Y-axis direction) of the vibration unit 820.

In one embodiment, the vibration unit 820 and the support unit 810 may be bonded to each other at least in part. For example, with reference to FIG. 8a, the coupling surface 812 of the support unit 810 may be bonded to a side surface of the vibration unit 820 using a separate adhesive member (e.g., bond, double-sided tape). With reference to FIG. 8b, the fixing area 813 of the support unit 810 may be bonded to one surface of the vibration unit 820 using a separate adhesive member (e.g., bond, double-sided tape).

In one embodiment, the vibration unit 820 and the support unit 810 may be bonded to each other at least in part, and the space between the vibration unit 820 and the support unit 810 may be sealed. As the space between the vibration unit 820 and the support unit 810 is sealed, sound generated from the vibration unit 820 may travel along the conduit unit 830 and be transmitted to the outside of the electronic device 800 through the radiation opening 235 (see FIG. 3).

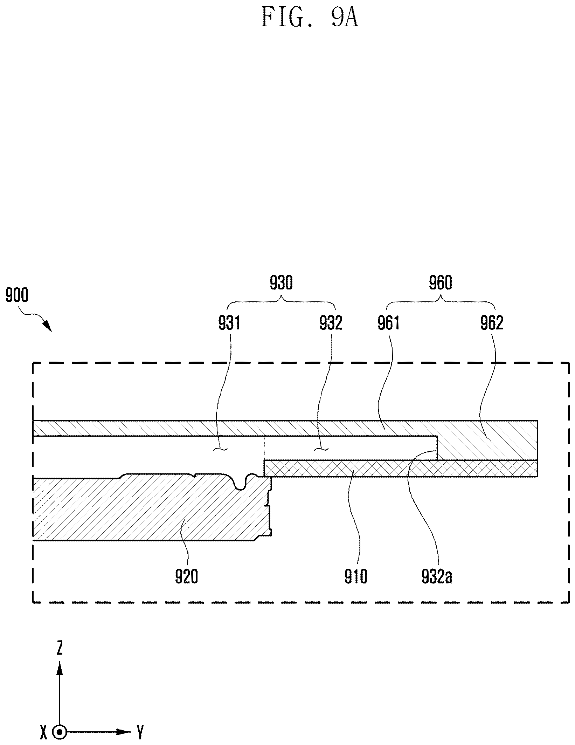

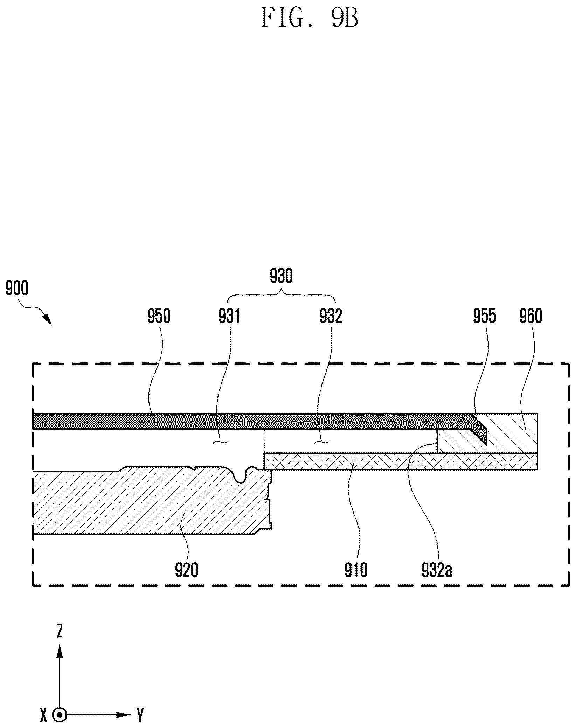

FIGS. 9a and 9b are diagrams illustrating an electronic device 900 according to one embodiment of the present disclosure.

The electronic device 900 of FIGS. 9a and 9b may be substantially identical to or similar to the electronic device 200 illustrated in FIG. 2c. For example, the electronic device 900 of FIGS. 9a and 9b may mean the electronic device 200 of FIG. 2c or may include at least a portion of the electronic device 200 of FIG. 2c.

In describing an electronic device 900 according to one embodiment of the present disclosure, the width direction of the electronic device 900 may mean the X-axis direction, and the length direction of the electronic device 900 may mean the Y-axis direction. The height direction of the electronic device 900 may mean the Z-axis direction.

FIGS. 9a and 9b may be conceptual diagrams illustrating an electronic device 900 according to one embodiment, in a cross-section perpendicular to the width direction (e.g., X-axis direction) of the electronic device 900. For example, FIGS. 9a and 9b may be conceptual diagrams illustrating a cross-section of the electronic device 900 corresponding to the A-A' cross-section of the electronic device 200 of FIG. 2c.

With reference to FIG. 9a, an electronic device 900 according to one embodiment may include a first support unit 910, a vibration unit 920, a conduit unit 930, and/or a second support unit 960.

With reference to FIG. 9a, a conduit unit 930 according to one embodiment may be formed by a vibration unit 920, a first support unit 910, and a second support unit 960. For example, the conduit unit 930 may be a space that is at least partially surrounded by the vibration unit 920, the first support unit 910, and the second support unit 960.

With reference to FIG. 9a, a second support unit 960 according to one embodiment may include a cover area 961 and/or a support area 962. The cover area 961 may be an area that covers the conduit unit 930 and extends in a direction substantially perpendicular to the height direction (e.g., Z-axis direction) of the electronic device 900. With reference to FIG. 9b, the support area 962 may be an area that is connected to the cover area 961 and extends in the height direction (e.g., Z-axis direction) of the electronic device 900. The support area 962 may be disposed on one surface of the first support unit 910.

With reference to FIG. 9a, in one embodiment, a cover area 961 may be disposed in one direction (e.g., positive Z-axis direction) with respect to the second tube 932 of the conduit unit 930, and a vibration unit 920 and/or a first support unit 910 may be disposed in the other direction (e.g., negative Z-axis direction) with respect to the second tube 932 of the conduit unit 930 .

With reference to FIG. 9b, an electronic device 900 according to one embodiment may include a first support unit 910, a vibration unit 920, a conduit unit 930, a cover 950, and/or a second support unit 960.

With reference to FIG. 9b, a conduit unit 930 according to one embodiment may be formed by a vibration unit 920, a first support unit 910, a cover 950, and a second support unit 960. For example, the conduit unit 930 may be a space that is at least partially surrounded by the vibration unit 920, the first support unit 910, the cover 950, and the second support unit 960.

With reference to FIG. 9b, a support unit 960 according to one embodiment may be formed separately from the cover 950. For example, the second support unit 960 may be formed separately from the cover 950 and then coupled to the cover 950. The second support unit 960 may be disposed on one surface of the first support unit 910.

With reference to FIG. 9b, a cover 950 according to one embodiment may include a connection area 955 at a distal end. The connection area 955 may be an area extending in an inclined direction from a surface of the cover 950 (e.g., a surface perpendicular to the Z-axis direction of the cover 950) at the distal end of the cover 950. For example, the second support unit 960 and the cover 950 may be more strongly coupled through the connection area 955.

With reference to FIG. 9b, in one embodiment, a cover 950 may be disposed in one direction (e.g., positive Z-axis direction) with respect to the conduit unit 930, and a vibration unit 920 and a first support unit 910 may be disposed in the other direction (e.g., negative Z-axis direction).

With reference to FIGS. 9a and 9b, in one embodiment, the conduit unit 930 may include a first tube 931 and/or a second tube 932. The first tube 931 and the second tube 932 may extend along the length direction (e.g., the Y-axis direction) of the electronic device 900. The first tube 931 may be connected to a radiation opening 235 (see FIG. 3) at one end and connected to the second tube 932 at the other end. The second tube 932 may be connected to the first tube 931 and may be formed in a closed shape at an end 932a.

With reference to FIGS. 9a and 9b, the end 932a of the second tube 932 may be formed by the second support unit 960. For example, the second tube 932 may be formed in a closed form at the end 932a by the second support unit 960.

In one embodiment, the first support unit 910 of FIGS. 9a and 9b may include stainless steel (STS). For example, stainless steel (STS) may be processed to form the first support unit 910.

In one embodiment, the second support unit 960 of FIGS. 9a and 9b may include a resin material. For example, the resin material may be processed through injection molding to form the second support unit 960.

In one embodiment, the cover 950 of FIG. 9b may include stainless steel (STS). For example, stainless steel (STS) may be processed to form the cover 950. In one embodiment, when the cover 950 of the electronic device 900 includes stainless steel, the thickness of the cover 950 may be formed relatively thin.

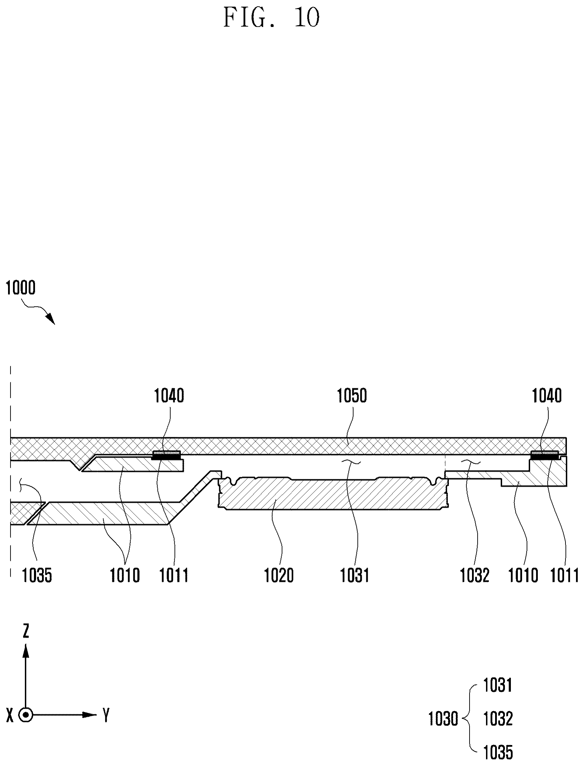

FIG. 10 is a diagram illustrating an electronic device 1000 according to one embodiment of the present disclosure.

The electronic device 1000 of FIG. 10 may be substantially identical to or similar to the electronic device 200 illustrated in FIG. 2c. For example, the electronic device 1000 of FIG. 10 may mean the electronic device 200 of FIG. 2c or may include at least a portion of the electronic device 200 of FIG. 2c.

In describing an electronic device 1000 according to one embodiment of the present disclosure, the width direction of the electronic device 1000 may mean the X-axis direction, and the length direction of the electronic device 1000 may mean the Y-axis direction. The height direction of the electronic device 1000 may mean the Z-axis direction.

FIG. 10 may be a conceptual diagram illustrating an electronic device 1000 according to one embodiment of the present disclosure in a cross-section perpendicular to the width direction (e.g., X-axis direction) of the electronic device 1000. For example, FIG. 10 may be a conceptual diagram illustrating a cross-section of the electronic device 1000 corresponding to the A-A' cross-section of the electronic device 200 of FIG. 2c.

With reference to FIG. 10, an electronic device 1000 according to one embodiment may include a support unit 1010, a vibration unit 1020, a conduit unit 1030, an adhesive member 1040, and/or a cover 1050. The support unit 1010, the vibration unit 1020, the conduit unit 1030, the adhesive member 1040, and the cover 1050 of the electronic device 1000 illustrated in FIG. 10 may have substantially the same functions as the support unit 210, the vibration unit 220, the conduit unit 230, the adhesive member 240, and the cover 250 of FIGS. 2a, 2b, and 2c, respectively.

With reference to FIG. 10, a conduit unit 1030 according to one embodiment may be formed by a vibration unit 1020, a supporting section 1010, and a cover 1050. For example, the conduit unit 1030 may be a space that is at least partially surrounded by the vibration unit 1020, the supporting section 1010, and the cover 1050.

With reference to FIG. 10, in one embodiment, a cover 1050 may be disposed in one direction (e.g., positive Z-axis direction) with respect to a conduit unit 1030, and a vibration unit 1020 may be disposed in the other direction (e.g., negative Z-axis direction).

With reference to FIG. 10, the cover 1050 may be coupled to at least a portion of the support 1010 through an adhesive member 1040. The support 1010 may include a seating unit 1011 on which the adhesive member 1040 is disposed. The adhesive member 1040 may be disposed on the seating unit 1011 of the support 1010 and may couple the cover 1050 and the support 1010 to each other.

In one embodiment, the cover 1050 may be a constitution having a function other than forming the conduit unit 1030. For example, the cover 1050 may include a display (e.g., a display module 160, see FIG. 1) included in the electronic device 1000. When the cover 1050 includes a display, the cover 1050 may serve to visually display information to the outside of the electronic device 1000.

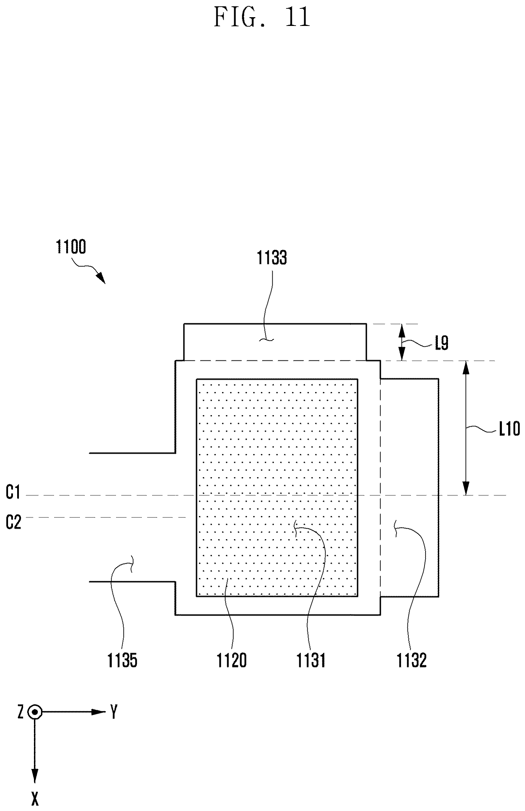

FIG. 11 is a diagram illustrating an electronic device 1100 according to one embodiment of the present disclosure.

The electronic device 1100 of FIG. 11 may be substantially the same as or similar to the electronic device 200 illustrated in FIG. 4. For example, the electronic device 1100 of FIG. 11 may mean the electronic device 200 of FIG. 4 or may include at least a portion of the electronic device 200 of FIG. 4.

In describing an electronic device 1100 according to one embodiment of the present disclosure, the width direction of the electronic device 1100 may mean the X-axis direction, and the length direction of the electronic device 1100 may mean the Y-axis direction. The height direction of the electronic device 1100 may mean the Z-axis direction.

FIG. 11 may be a conceptual diagram illustrating an electronic device 1100 according to one embodiment, in a cross-section perpendicular to the height direction (e.g., Z-axis direction) of the electronic device 1100. For example, FIG. 11 may be a conceptual diagram illustrating a cross-section of the electronic device 1100 corresponding to the B-B' cross-section of the electronic device 200 of FIG. 2c.

In one embodiment, the electronic device 1100 may include a vibration unit 1120 and/or a conduit unit 1130.

In one embodiment, the conduit unit 1130 may include a first tube 1131, a second tube 1132, a third tube 1133, and/or a radiation opening 1135.

In one embodiment, the vibration unit 1120 may be disposed to overlap the first tube 1131.

In one embodiment, the first center line C1 may mean a line passing through the center of the vibration unit 1120 (e.g., the center of the X-axis direction of the vibration unit 1120) along a direction parallel to the length direction (e.g., the Y-axis direction) of the electronic device 1100.

In one embodiment, the second center line C2 may mean a line passing through the center of the radiation opening 1135 (e.g., the center of the radiation opening 1135 in the X-axis direction) along a direction parallel to the length direction (e.g., the Y-axis direction) of the electronic device 1100.

In one embodiment, the third tube 1133 may be formed to extend in a direction substantially perpendicular to the direction in which the second tube 1132 extends. For example, with reference to FIG. 11, the second tube 1132 may extend in the Y-axis direction, and the third tube 1133 may extend in the X-axis direction.

In one embodiment, when the first center line C1 and the second center line C2 do not coincide, the shape of the conduit unit 1130 may not be formed symmetrically with respect to the widthwise center line (e.g., the first center line C1) of the vibration unit 1120.

In one embodiment, when the first center line C1 and the second center line C2 do not coincide, the third tube 1133 may extend from the first tube 1131 in an opposite direction to the direction in which the second center line C2 is located with respect to the first center line C1. For example, with reference to FIG. 11, since the second center line C2 is located in the positive X-axis direction with respect to the first center line C1, the third tube 1133 may extend from the first tube 1131 in the negative X-axis direction.

In one embodiment, the third tube 1133 may extend from the first tube 1131 by a ninth length L9. In one embodiment, the distance from the center of the vibration unit 1120 to an end of the first tube 1131 (e.g., an end facing the negative X-axis direction of the first tube 1131) may have a tenth length L10.

When the first center line C1 and the second center line C2 do not coincide, sound waves reflected from one side of the conduit unit 1130 (e.g., the side surface located in the positive X-axis direction of the conduit unit 1130) and the other side (e.g., the side surface located in the negative X-axis direction of the conduit unit 1130) may be difficult to cancel each other out. The electronic device 1100 according to one embodiment may include a third tube 1133 to allow sound waves reflected from one side and the other side of the conduit unit 1130 to cancel each other out, when the first center line C1 and the second center line C2 do not coincide.

FIG. 12 is a graph illustrating the sound pressure level of an electronic device 200 according to one embodiment of the present disclosure.

The horizontal axis of the graph 1200 illustrated in FIG. 12 may represent the frequency (e.g., hertz (Hz)) of the vibration unit 220 of the electronic device 200. The vertical axis of the graph illustrated in FIG. 12 may represent the sound pressure level (SPL) (e.g., decibel (dB)) generated from the vibration unit 220.

The graph 1200 of FIG. 12 may include a first measurement line 1201, a second measurement line 1202, and a third measurement line 1203. The first measurement line 1201 may mean a sound pressure level measurement value when the second length L2 of the second tube 232 in the electronic device 200 is formed relatively small. The third measurement line 1203 may mean a sound pressure level measurement value when the second length L2 of the second tube 232 in the electronic device 200 is formed relatively long. For example, the third measurement line 1203 may represent a sound pressure level value measured in an electronic device 200 in which the second length L2 is formed longer compared to an electronic device 200 corresponding to the second measurement line 1202. The second measurement line 1202 may represent a sound pressure level value measured in an electronic device 200 having a second length L2 formed longer compared to the electronic device 200 corresponding to the first measurement line 1201.

In one embodiment, on the basis of the second length L2 of the second tube 232 of the electronic device 200, the measured value of the sound pressure level corresponding to the frequency (e.g., hertz (Hz)) of the vibration unit 220 may vary.

In one embodiment, the peaks 1201a and 1201b of the first measurement line 1201 may mean measurement values of local peaks of the first measurement line 1201. The first measurement line 1201 may include the first peak 1201a and/or the second peak 1201b. For example, with reference to FIG. 12, the first peak 1201a and the second peak 1201b may have relatively high values compared to other areas of the first measurement line 1201.

In one embodiment, the trough 1201c of the first measurement line 1201 may mean a measurement value of a local trough of the first measurement line 1201. With reference to FIG. 12, the trough 1201c may have a relatively low value compared to other areas of the first measurement line 1201.

In one embodiment, the first peak 1201a and the second peak 1202b may vary on the basis of the sum of the first length L1 (see FIG. 3) and the second length L2 (see FIG. 3) of the electronic device 200.

In one embodiment, the trough 1201c may vary on the basis of the sum of the second length L2 (see FIG. 3) and the third length L3 (see FIG. 3) of the electronic device 200.

In one embodiment, the second peak 1201b and the trough 1201c of the first measurement line 1201 may change according to a change in the second length L2 of the electronic device 200. In one embodiment, as the second length L2 of the electronic device 200 increases, the measurement lines 1201, 1202, and 1203 corresponding to the electronic device 200 may change in the order of the first measurement line 1201, the second measurement line 1202, and the third measurement line 1203. For example, the third measurement line 1203 corresponding to the electronic device 200 in which the second length L2 of the electronic device 200 is formed relatively long may be formed in a shape in which the second peak 1201b and the trough 1201c are eliminated from the first measurement line 1201.

With reference to FIG. 12, the sound pressure level of the third measurement line 1203 may change with a relatively more uniform value according to the change in frequency compared to the second measurement line 1202 and the first measurement line 1201. For example, since the third measurement line 1203 is formed in a shape in which the second peak 1201b and the trough 1201c are eliminated from the first measurement line 1201, the sound pressure level may change with a relatively more uniform value according to the change in frequency.

An electronic device 200 according to one embodiment of the present disclosure comprises: a vibration unit 220 for generating a sound; and a conduit unit 230 which is formed on the front surface of the vibration unit 220, and which is the space through which the sound generated by the vibration unit 220 is transmitted, wherein the conduit unit 230 includes: a radiation opening 235 for transmitting the sound to the outside of the electronic device; a first tube 231, which is connected to the radiation opening 235 at one end thereof and extends a first length L1; and a second tube 232, which is connected to the first tube 231 at the other end of the first tube 231, extends a second length L2 in the direction opposite to that of the radiation opening 235, and is shaped to have a closed end.

In one embodiment, the second length L2 may be determined on the basis of the first length L1 and the third length L3, which is the length from the center of the vibration unit 220 to the other end of the first tube 231.

In one embodiment, the second length L2 is determined on the basis of the first length L1, the third length L3 and the first effective length L1e, and the first effective length L1e may be determined on the basis of the shape of the conduit unit 230.

In one embodiment, the width of the second tube 232 may be formed smaller than the width of the first tube 231.

In one embodiment, the electronic device 600 may include a plurality of second tubes 632, and the plurality of second tubes 632 may be spaced apart from each other in the width direction of the electronic device 600.

In one embodiment, the plurality of second tubes 632 may be formed with different widths.

In one embodiment, the sum of the widths of each of the plurality of second tubes 632 may be formed to be smaller than the width of the first tube 631.

In one embodiment, the second tube 232 may have a length determined in the height direction of the second tube 232 and may extend in the width direction of the second tube 232.

In one embodiment, the electronic device 200 may include a cover 250 disposed spaced apart from the vibration unit 220 with a first tube 231 interposed therebetween and a support unit 210 surrounding the vibration unit 220, and the second tube 232 may be a space formed by the cover 250 and the support unit 210.

In one embodiment, the electronic device 200 may include an adhesive member 240 disposed on a support unit 210, and the cover 250 may be coupled to the support unit 210 using the adhesive member 240.

In one embodiment, the cover 1050 may be a display that visually displays information to the outside of the electronic device 1000.

In one embodiment, the support unit 810 may include a fixed area 813, which may be an area where a portion of the support unit 810 extends to face one surface of the vibration unit 820.

In one embodiment, the electronic device 900 may include a second support unit 960 including a cover area 961 disposed in an opposite direction to the first support unit 910 with respect to the first support unit 910 and the second tube 932, wherein the first support unit 910 includes stainless steel, and the conduit unit 930 may be a space at least partially surrounded by the vibration unit 920, the first support unit 910, and the second support unit 960.

In one embodiment, the electronic device 900 may include a first support unit 910, a cover 950 disposed in an opposite direction to the first support unit 910 with respect to a second tube 932, and a second support unit 960 coupled to the cover 950 and disposed on one surface of the first support unit 910, wherein the first support unit 910 and the cover 950 include stainless steel, and the conduit unit 930 may be a space at least partially surrounded by the vibration unit 920, the first support unit 910, the cover 950, and the second support unit 960.

In one embodiment, when the widthwise center of the radiation opening 1135 is located spaced apart from the widthwise center of the vibration unit 1120 in the width direction of the electronic device 1100, the electronic device 1100 may include a third tube 1133 connected to the first tube 1131 and extending in an opposite direction to the direction in which the widthwise center of the radiation opening 1135 is located with respect to the widthwise center of the vibration unit 1120.

An electronic device 200 according to one embodiment of the present disclosure comprises: a vibration unit 220 that generates sound; a support unit 210 that surrounds the vibration unit 220; a cover 250 that is disposed to be spaced apart from the vibration unit 220; and a conduit unit 230 formed by the cover 250 and the support unit 210, wherein the conduit unit 230 may include: a radiation opening 235 for transmitting the sound to the outside of the electronic device 200; a first tube 231, which is connected to the radiation opening 235 at one end thereof and extends a first length L1; and a second tube 232, which is connected to the first tube 231 at the other end of the first tube 231, extends a second length L2 in the direction opposite to that of the radiation opening 235, and is shaped to have a closed end.

The electronic device according to one embodiment of the present disclosure may be various forms of devices. The electronic device may include, for example, a portable communication device (e.g., a smartphone), a computer device, a portable multimedia device, a portable medical device, a camera, a wearable device, or a home appliance. The electronic device according to the embodiment of the present disclosure is not limited to the aforementioned devices.

One embodiment of the present disclosure and the terms used herein are not intended to limit the technical features described herein to specific embodiments, but should be understood to include various modifications, equivalents, or substitutes of the embodiments. With respect to the description of the drawings, similar or related components may be designated by similar reference numerals. The singular form of a noun corresponding to an item may include one or more of the items unless the context clearly indicates otherwise. In this disclosure, "A or B," "at least one of A and B," "at least one of A or B," "A, B, or C," "at least one of A, B, and C," and "at least one of A, B, or C" may each include any one of the items listed together with the corresponding phrase, or any possible combination thereof. Terms such as "1st", "2nd", or 'first' or "second" may be used simply to distinguish one component from another and do not limit the components in any other respect (e.g., importance or order). When a component (e.g., the first) is mentioned as being "coupled" or "connected" to another component (e.g., the second), with or without the terms 'functionally' or "communicatively," it means that the first component is connected to the second component directly (e.g., by wire), wirelessly, or through a third component.

The term "module" as used in one embodiment of the present disclosure may include a unit implemented in hardware, software, or firmware, and may be used interchangeably with terms such as logic, logic block, component, or circuit. A module may be an integral component or the smallest unit or part thereof that performs one or more functions. For example, according to one embodiment, a module may be implemented in the form of an ASIC (application-specific integrated circuit).

One embodiment of the present disclosure may be implemented as software (e.g., program 140) comprising one or more instructions stored on a storage medium (e.g., an internal memory 136 or an external memory 138) readable by a machine (e.g., an electronic device 101). For example, the processor (e.g., the processor 120) of the device (e.g., the electronic device 101) can call at least one of the stored instructions from the storage medium and execute it. This enables the device to operate to perform at least one function according to the called instruction. The one or more instructions may include code generated by a compiler or code that can be executed by an interpreter. The storage medium readable by the device may be provided in the form of a non-transitory storage medium. Here, "non-transitory" means only that the storage medium is a tangible device and does not include signals (e.g., electromagnetic waves), and this term does not distinguish between cases where data is stored permanently on the storage medium and cases where it is stored temporarily.

According to one embodiment, the methods according to various embodiments of the present disclosure may be provided in the form of a computer program product. A computer program product may be traded as a commodity between a seller and a buyer. A computer program product may be distributed in the form of a storage medium readable by a device (e.g., a compact disc read-only memory (CD-ROM)), or it may be distributed online (e.g., by download or upload) through an application store (e.g., Play Store™) or directly between two user devices (e.g., smartphones). In the case of online distribution, at least part of the computer program product may be temporarily stored or generated on a device-readable storage medium such as the manufacturer's server, the application store's server, or an intermediary server's memory.

According to one embodiment, each of the aforementioned components (e.g., modules or programs) may include one or more objects, and some of the multiple objects may be separated and disposed in other components. According to various embodiments, one or more of the aforementioned components or operations may be omitted, or one or more other components or operations may be added. Alternatively or additionally, multiple components (e.g., modules or programs) may be integrated into a single component. In such a case, the integrated component may perform one or more functions of each of the multiple components in a manner that is identical or similar to that performed by the corresponding component of the multiple components prior to integration.

According to one embodiment, the operations performed by a module, a program, or other component may be executed sequentially, in parallel, repeatedly, or heuristically, or one or more of the operations may be executed in a different order, omitted, or one or more other operations may be added.

**Claims**

1. An electronic device 200 comprising:

   a vibration unit 220 for generating a sound; and
   a conduit unit 230 which is formed on the front surface of the vibration unit, and which is the space through which the sound generated by the vibration unit is transmitted, wherein
   the conduit unit includes:

      a radiation opening 235 for transmitting the sound to the outside of the electronic device;
      a first tube 231, which is connected to the radiation opening at one end thereof and extends a first length L1; and
      a second tube 232, which is connected to the first tube at the other end of the first tube, extends a second length L2 in the direction opposite to that of the radiation opening, and is shaped to have a closed end, and the second length can be determined on the basis of the first length and a third length L3, which is the length from the center of the vibration unit to the other end of the first tube.

2. The electronic device of claim 1, wherein

   the second length is determined on the basis of the first length, the third length and the first effective length L1e, and
   the first effective length is determined on the basis of the shape of the conduit unit.

3. The electronic device of claim 1, wherein the width of the second tube is formed to be smaller than the width of the first tube.

4. The electronic device of claim 1, comprising a plurality of the second tubes, wherein the plurality of second tubes are disposed spaced apart from each other in the width direction of the electronic device.

5. The electronic device of claim 4, wherein

the plurality of second tubes are formed with different widths.

6. The electronic device of claim 4, wherein the sum of the widths of each of the plurality of second tubes is formed to be smaller than the width of the first tube.

7. The electronic device of claim 1, wherein the second tube has a length determined in the height direction of the second tube and extending in the width direction of the second tube.

8. The electronic device of claim 1, further comprising a cover 250 disposed spaced apart from the vibration unit with a first tube interposed therebetween and a support unit 210 surrounding the vibration unit, wherein the second tube is a space formed by the cover and the support unit.

9. The electronic device of claim 8, further comprising an adhesive member 240 disposed on the support unit, wherein the cover is coupled to the support unit using the adhesive member.

10. The electronic device of claim 8, wherein the cover is a display that visually displays information to the outside of the electronic device.

11. The electronic device of claim 8, wherein

    the support unit comprises a fixed area 813, and the fixed area is the area in which a portion of the support unit extends to face one surface of the vibration unit.

12. The electronic device of claim 1, further comprising:

    a first support unit 910; and a second support unit 960 including a cover area 961 located in the opposite direction of the first support unit with respect to the second tube, wherein the first support unit includes stainless steel, and the conduit unit is a space at least partially surrounded by the vibration unit, the first support unit, and the second support unit.

13. The electronic device of claim 1, further comprising:

    a first support unit 910; a cover 950 located in the opposite direction of the first support unit with respect to the second tube; and a second support unit 960 disposed on one surface of the first support unit, wherein

the first support unit and the cover includes stainless steel, and the conduit unit is a space at least partially surrounded by the vibration unit, the first support unit, the cover, and the second support unit.

14. The electronic device of claim 1, when the widthwise center of the radiation opening is located spaced apart from the widthwise center of the vibration unit in the width direction of the electronic device, further comprising a third tube 1133 connected to the first tube and extending in an opposite direction to the direction in which the widthwise center of the radiation opening is located with respect to the widthwise center of the vibration unit.

15. An electronic device 200 comprising:

    a vibration unit 220 that generates sound; a support unit 210 that surrounds the vibration unit; a cover 250 that is disposed to be spaced apart from the vibration unit; and a conduit unit 230 formed by the cover and the support unit, wherein the conduit unit includes:

       a radiation opening 235 for transmitting the sound to the outside of the electronic device; a first tube 231, which is connected to the radiation opening at one end thereof and extends a first length L1; and a second tube 232, which is connected to the first tube at the other end of the first tube, extends a second length L2 in the direction opposite to that of the radiation opening, and is shaped to have a closed end.

## FIG. 1

ELECTRONIC DEVICE 101

- INPUT MODULE 150
- SOUND OUTPUT MODULE 155
- BATTERY 189
- POWER MANAGEMENT MODULE 188
- DISPLAY MODULE 160
- AUDIO MODULE 170
- HAPTIC MODULE 179
- SENSOR MODULE 176
- CAMERA MODULE 180
- INTERFACE 177
- CONNECTION TERMINAL 178

MEMORY 130
- VOLATILE MEMORY 132
- NON-VOLATILE MEMORY 134
  - INTERNAL MEMORY 136
  - EXTERNAL MEMORY 138

PROCESSOR 120
- MAIN PROCESSOR 121
- AUXILIARY PROCESSOR 123

COMMUNICATION MODULE 190
- WIRELESS COMMUNICATION MODULE 192
- WIRED COMMUNICATION MODULE 194

SUBSCRIBER IDENTIFICATION MODULE 196

ANTENNA MODULE 197

PROGRAM 140
- APPLICATION 146
- MIDDLEWARE 144
- OPERATING SYSTEM 142

100

SECOND NETWORK 199

ELECTRONIC DEVICE 104

FIRST NETWORK 198

ELECTRONIC DEVICE 102

SERVER 108

EP 4 727 163 A1

# FIG. 2A

# FIG. 2B

FIG. 2C

# FIG. 3

# FIG. 4

# FIG. 5

# FIG. 6A

# FIG. 6B

FIG. 6C

FIG. 7

# FIG. 8A

# FIG. 8B

FIG. 9A

# FIG. 9B

# FIG. 10

1000

1040          1050          1040

1035   1010   1011          1020   1031          1032   1010   1011

Z

X ⊙ → Y

$\left.\begin{array}{l} 1031 \\ 1032 \\ 1035 \end{array}\right\}$ 1030

# FIG. 11

# FIG. 12

## INTERNATIONAL SEARCH REPORT

| International application No. |
|---|
| **PCT/KR2024/010287** |

### A. CLASSIFICATION OF SUBJECT MATTER

**H04R 1/34**(2006.01)i; **H04R 1/02**(2006.01)i; **H04R 7/16**(2006.01)i

According to International Patent Classification (IPC) or to both national classification and IPC

### B. FIELDS SEARCHED

Minimum documentation searched (classification system followed by classification symbols)

H04R 1/34(2006.01); G06F 1/16(2006.01); H04R 1/00(2006.01); H04R 1/28(2006.01); H04R 17/02(2006.01); H04R 17/10(2006.01); H04R 7/04(2006.01); H04R 9/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전자 장치(electronic device), 진동부(vibration unit), 관로부(conduit unit), 방사 개구(radiation aperture), 소리(sound)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0072056 A (SAMSUNG ELECTRONICS CO., LTD.) 22 June 2020 (2020-06-22)<br>See paragraphs [0076]-[0082]; claim 1; and figure 8. | 1-15 |
| Y | KR 10-2015-0004643 A (SAMSUNG ELECTRONICS CO., LTD.) 13 January 2015 (2015-01-13)<br>See paragraph [0053]; and figure 5. | 1-15 |
| A | KR 10-2023-0060523 A (SHENZHEN SHOKZ CO., LTD.) 04 May 2023 (2023-05-04)<br>See claim 1; and figure 1. | 1-15 |
| A | KR 10-2023-0057303 A (LG ELECTRONICS INC.) 28 April 2023 (2023-04-28)<br>See claims 1-4; and figure 13. | 1-15 |
| A | US 2016-0037243 A1 (APPLE INC.) 04 February 2016 (2016-02-04)<br>See claim 1; and figures 2-4. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 October 2024** | **31 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010287**

| Patent document cited in search report | | | Publication date (day/month/year) | Patent family member(s) | | | Publication date (day/month/year) |
|---|---|---|---|---|---|---|---|
| KR | 10-2020-0072056 | A | 22 June 2020 | CN | 113170264 | A | 23 July 2021 |
| | | | | CN | 113170264 | B | 11 June 2024 |
| | | | | EP | 3815393 | A1 | 05 May 2021 |
| | | | | EP | 3815393 | B1 | 16 August 2023 |
| | | | | KR | 10-2602332 | B1 | 16 November 2023 |
| | | | | US | 11076221 | B2 | 27 July 2021 |
| | | | | US | 11109144 | B2 | 31 August 2021 |
| | | | | US | 2020-0196046 | A1 | 18 June 2020 |
| | | | | WO | 2020-122387 | A1 | 18 June 2020 |
| KR | 10-2015-0004643 | A | 13 January 2015 | CN | 104284281 | A | 14 January 2015 |
| | | | | CN | 104284281 | B | 28 February 2020 |
| | | | | EP | 2822295 | A1 | 07 January 2015 |
| | | | | KR | 10-2023189 | B1 | 20 September 2019 |
| | | | | US | 2015-0010190 | A1 | 08 January 2015 |
| | | | | US | 9485565 | B2 | 01 November 2016 |
| | | | | WO | 2015-002407 | A1 | 08 January 2015 |
| KR | 10-2023-0060523 | A | 04 May 2023 | CN | 114697837 | A | 01 July 2022 |
| | | | | CN | 114697838 | A | 01 July 2022 |
| | | | | CN | 116325802 | A | 23 June 2023 |
| | | | | CN | 116349249 | A | 27 June 2023 |
| | | | | CN | 116803102 | A | 22 September 2023 |
| | | | | EP | 4184946 | A1 | 24 May 2023 |
| | | | | EP | 4184946 | A4 | 21 February 2024 |
| | | | | EP | 4187924 | A1 | 31 May 2023 |
| | | | | EP | 4187924 | A4 | 20 March 2024 |
| | | | | EP | 4203508 | A1 | 28 June 2023 |
| | | | | EP | 4203508 | A4 | 10 April 2024 |
| | | | | JP | 2023-542396 | A | 06 October 2023 |
| | | | | JP | 2023-543513 | A | 16 October 2023 |
| | | | | JP | 2023-550132 | A | 30 November 2023 |
| | | | | KR | 10-2023-0066092 | A | 12 May 2023 |
| | | | | KR | 10-2023-0084268 | A | 12 June 2023 |
| | | | | US | 2023-0188911 | A1 | 15 June 2023 |
| | | | | US | 2023-0217163 | A1 | 06 July 2023 |
| | | | | US | 2023-0247352 | A1 | 03 August 2023 |
| | | | | WO | 2022-141585 | A1 | 07 July 2022 |
| | | | | WO | 2022-141827 | A1 | 07 July 2022 |
| | | | | WO | 2022-141828 | A1 | 07 July 2022 |
| KR | 10-2023-0057303 | A | 28 April 2023 | US | 2023-0291819 | A1 | 14 September 2023 |
| | | | | WO | 2022-045397 | A1 | 03 March 2022 |
| US | 2016-0037243 | A1 | 04 February 2016 | CN | 105323674 | A | 10 February 2016 |
| | | | | CN | 105323674 | B | 07 August 2018 |
| | | | | CN | 204906680 | U | 23 December 2015 |
| | | | | DE | 212015000188 | U1 | 13 March 2017 |
| | | | | KR | 10-1717850 | B1 | 17 March 2017 |
| | | | | KR | 10-2016-0016693 | A | 15 February 2016 |
| | | | | US | 9363589 | B2 | 07 June 2016 |
| | | | | WO | 2016-018660 | A1 | 04 February 2016 |

Form PCT/ISA/210 (patent family annex) (July 2022)